# EUROPÄISCHE PATENTSCHRIFT

(11) **EP 1 010 992 B1**
(45) Veröffentlichungstag und Bekanntmachung des Hinweises auf die Patenterteilung: **31.05.2006**
(21) Anmeldenummer: 99122759.6
(22) Anmeldetag: 16.11.1999
(51) Int. Cl.: G01V 8/12, G02B 5/00, G01V 8/10, G02B 17/08

(54) **Optisches System**
Optical system
Système optique

(30) Priorität: 18.12.1998 DE 19858769
(43) Veröffentlichungstag der Anmeldung: 21.06.2000
(73) Patentinhaber: SICK AG, 79183 Waldkirch (DE)
(72) Erfinder: Alt, Gerhard, 79350 Sexau (DE); Ringwald, Siegfried, 79215 Elzach (DE); Blümcke, Thomas, 79261 Gutach (DE)
(74) Vertreter: Manitz, Finsterwald & Partner GbR

(56) Entgegenhaltungen:
- WO-A-96/10206
- DE-A- 2 550 814
- DE-A- 3 119 498
- DE-A- 19 601 955
- US-A- 4 254 333
- US-A- 5 793 538

## Beschreibung

Die Erfindung betrifft ein optisches System, insbesondere für opto-elektronische Systeme, gemäß dem Oberbegriff des Anspruchs 1.

Optische Systeme, die lichtdurchlässige optische Elemente und mit diesen optisch gekoppelte Empfangseinheiten aufweisen, dienen beispielsweise in Lichtschranken dazu, von einem Sendeelement ausgesendetes und von einem Tastobjekt oder einem Reflektor reflektiertes Licht mittels des optischen Elementes zu sammeln und der Empfangseinheit zuzuführen.

Bekannte optische Systeme, bei denen das optische Element beispielsweise in einen Tubus eingebaut wird, zeichnen sich dadurch aus, daß die Abmessungen der zum Empfangen bzw. Abstrahlen von Licht zur Verfügung stehenden Fläche sowie der Bautiefe des Tubus etwa in der gleichen Größenordnung liegen. Die Brennweite abbildender optischer Systeme wird insbesondere durch die Krümmungen, die Abstände und die Brechungsindizes der optischen Grenzflächen bestimmt. Dabei erfordern kurze Brennweiten kleine Krümmungsradien, weshalb der Pupillendurchmesser einzelner optischer Teilflächen klein ist. Bei üblichen optischen Systemen ist aus diesem Grund die Brennweite größer als der Durchmesser der wirksamen optischen Fläche.

In der Sensorik werden häufig vergleichsweise einfache optische Systeme in Form von Einzellinsen verwendet, bei denen das Verhältnis von Pupillendurchmesser zu Brennweite aufgrund ihrer asphärischen Flächengeometrie optimiert ist und dem Wert 1 nahekommt.

Leistungsfähige optische Elemente mit einer vergleichsweise großen Empfangspupille weisen daher eine große Bautiefe auf, die in vielen Anwendungen störend ist.

Aus US 5,793,538 ist eine massive katadioptrische Linse bekannt, die eine im Wesentlichen ebene Eingangsseite, einen primären konkaven Spiegel, einen sekundären konvexen Spiegel sowie eine im Wesentlichen sphärische Ausgangsfläche umfasst. Diese Linse als Ganzes genommen dient als ein einziges optisches Element.

Auch WO 96/ 10206 Al beschreibt eine als ein einziges optisches Element dienende Linse, die mit einer Mehrzahl von reflektierenden Einzelflächen für elektromagnetische Strahlung versehen ist.

Aus DE 196 01 955 A1 ist eine optoelektronische Sendebaugruppe bekannt, die eine Vielzahl von jeweils als Sender dienenden Halbleiterlasern umfasst, denen jeweils eine Linse zugeordnet ist. Die Strahlung eines Halbleiterlasers kann ausgekoppelt und auf ein Monitorelement gelenkt werden.

DE 25 50 814 A 1 betrifft eine Zeilentastvorrichtung für Materialbahnen zur Fehlstellenermittlung. Ein von einer Materialbahn reflektierter Lichtfleck wird mittels eines Lichtleitstabes auf einen Fotoempfänger gelenkt. Zur Verbesserung der Lichtausbeute wird der reflektierte Lichtfleck aufgefächert, so dass er unter geringeren Verlusten mittels einer Stufenspiegelanordnung zu einem Fotoempfänger gelangt.

Es ist eine Aufgabe der Erfindung, ein optisches System der eingangs genannten Art zu schaffen, das bei möglichst geringer Bautiefe eine möglichst große Empfangs- bzw. Abstrahlfläche aufweist.

Diese Aufgabe wird erfindungsgemäß durch die Merkmale des Anspruchs 1 gelöst.

Durch das erfindungsgemäße Vorsehen einer flachen Lichtleiterplatte steht mit deren einer Flachseite eine im Vergleich zur Dicke der Lichtleiterplatte große Eintritts- bzw. Austrittsfläche für Licht zur Verfügung. Lichtschranken oder andere mit dem erfindungsgemäßen optischen Systern arbeitende Einrichtungen können folglich mit einer geringen Bautiefe versehen und insbesondere miniaturisiert werden, ohne daß damit eine Einschränkung der Leistungsfähigkeit des optischen Systems verbunden wäre.

Auf diese Weise können auch eine vergleichsweise kleine Baugröße aufweisende optische Systeme unter Bedingungen verwendet werden, in denen das einzufangende Licht eine geringe Intensität aufweist, so daß eine möglichst große Lichtsammelfläche erforderlich ist.

Die Lichtleiterplatte dient erfindungsgemäß gleichzeitig zum Sammeln bzw. Abstrahlen von Licht und als ein Medium, in welchem sich das Licht zwischen der Eintritts- bzw. Austrittsfläche und der Empfangs- bzw. Sendeeinheit ausbreiten kann. Somit ist die gesamte zum Einbau der Lichtleiterplatte zur Verfügung stehende Fläche als Lichtfenster nutzbar.

Des weiteren können z. B. an die Schmalseiten der Lichtleiterplatte direkt weitere optische Elemente, z. B. Linsen, Lichtleiter, etc., angekoppelt werden, wodurch planare Strukturen beliebiger Geometrie erzeugt werden können.

Ein wichtiger Vorteil des erfindungsgemäßen optischen Systems besteht darin, daß die Lichtleiterplatte aufgrund ihrer Flachbauweise direkt z. B. mit ihrer als Reflexionsfläche ausgebildeten Flachseite an eine Platine gekoppelt werden kann, die beispielsweise die Lichtsende- bzw. Empfangseinheit trägt und mit zur Bereitstellung bzw. Verarbeitung der von der Lichtsende- bzw. Empfangseinheit benötigten bzw. gelieferten Signale dienenden elektronischen Bauteilen bestückt ist. Durch die Erfindung kann nunmehr z. B. bei einem quaderförmigen Einbaugehäuse, in dem die Platine und gegebenenfalls weitere Bauteile des optischen Systems untergebracht sind, die Gehäuseseite mit der größten Fläche praktisch vollflächig als Lichtfenster z. B. für mittels der Lichtleiterplatte zu sammelndes Licht genutzt werden. Bisher stand als Lichtfenster vorzugsweise eine der Schmalseiten des Einbaugehäuses als Lichtfenster zur Verfügung, da für die bekannten, eine vergleichsweise große Bautiefe benötigenden optischen Elemente die Tiefe des Einbaugehäuses zur Verfügung stehen mußte. Erfindungsgemäß kann somit nicht nur eine der großflächigen Breitseiten des Einbaugehäuses als Lichtfenster genutzt werden, sonderen darüber hinaus auch die Tiefe des Einbaugehäuses verkleinert werden, wodurch ein wesentlicher Schritt in Richtung einer weiteren Miniaturisierung derartiger optischer Systeme gegangen wird.

Des weiteren kann die erfindungsgemäße Lichtleiterplatte mittels angeformter, bei der Herstellung mit ausgebildeter Positionierungszapfen in entsprechenden Ausnehmungen auf der Platine positioniert und fixiert werden, wodurch Justierung und Herstellung des optischen Systems erheblich vereinfacht werden.

Gemäß einer bevorzugten Ausführungsform der Erfindung ist die Oberflächensuktur, eine Mikrostruktur mit bevorzugt Abmessungen in der Größenordnung von Millimetern aufweisenden Strukturelementen.

Auf diese Weise kann die erfindungsgemäße Lichtleiterplatte mit den gewünschten optischen Eigenschaften versehen werden, ohne daß hierzu eine Vielzahl separater optischer Bauteile erforderlich wäre. Durch das Vorsehen einer Mikrostruktur kann pro Flächeneinheit eine große Anzahl von optischen Einzelelementen untergebracht werden, wodurch die Lichtleiterplatte unter Ausnutzung der gesamten zur Verfügung stehenden Fläche optimal an unterschiedliche Anforderungen angepaßt werden kann. Dies wäre mit separaten Bauteilen praktisch nicht realisierbar.

Gemäß einem weiteren bevorzugten Ausführungsbeispiel der Erfindung ist die Empfangs-/Sendeeinheit an und bevorzugt in unmittelbarer Nähe der die Reflexionsfläche bildenden Flachseite der Lichtleiterplatte angeordnet, wobei vorzugsweise die zum Empfangen und/ oder Aussenden von Licht vorgesehene Fläche der Empfangs-/Sendeeinheit wesentlich kleiner als die Lichteintritts- und/oder -austrittsfläche ist.

Hierdurch breitet sich das Licht überwiegend in der Ebene der Lichtleiterplatte aus, so daß für ein vergleichsweise großes als Sammel- und/oder Abstrahlfläche dienendes Lichtfenster lediglich eine einzige Empfangs-/Sendeeinheit erforderlich ist. Der Aufbau des erfindungsgemäßen optischen Systems wird dadurch vereinfacht.

Gemäß einer weiteren bevorzugten Ausführungsform der Erfindung beträgt die Dicke des optischen Elementes weniger als etwa 1 cm, bevorzugt weniger als etwa 5 mm und insbesondere etwa 2 mm, wobei bevorzugt die Abmessungen der Lichtleiterplatte in der Ebene der Lichtleiterplatte in der Größenordnung von Zentimetern liegen.

Die Lichtleiterplatte ist dadurch in optimaler Weise für eine Miniaturisierung optischer Systeme geeignet und - insbesondere bei Vorsehen einer Mikrostruktur zur Bildung der jeweiligen Flächen und bei einstückiger Ausführung - vergleichsweise einfach herzustellen, vielseitig einsetzbar und leicht zu handhaben.

Gemäß der Erfindung weisen die Lichteintritts- und/oder -austrittsfläche und die Reflexionsfläche jeweils eine Vielzahl von Einzelflächen auf, die jeweils über die Lichtleiterplatte verteilt angeordnet sind.

Hierdurch kann die gesamte Lichteintritts- und/oder -austrittsfläche mit Einzelflächen versehen werden, mit denen das zu sammelnde bzw. abzustrahlende Licht in der jeweils gewünschten Weise beeinflußt werden kann und die auch als Subaperturen bezeichnet werden.

Wenn gemäß einer bevorzugten Variante jeweils eine reflektierende Einzelfläche der Reflexionsfläche und eine Subapertur der Eintritts- bzw. Austrittsfläche paarweise einander zugeordnet sind, umfaßt das optische System eine Vielzahl von zu einer Einheit zusammengefaßten Einzelelemerite-Paaren, die bei der Ausbreitung des Lichts entlang der jeweils gewünschten Lichtausbreitungswege in der Lichtleiterplatte zusammenwirken.

Gemäß einer weiteren bevorzugten Ausführungsform ist die Reflexionsfläche derart ausgeführt, daß zumindest senkrecht und bevorzugt aus einem begrenzten vorbestimmten Raumwinkelbereich durch die Lichteintritts- und/oder -austrittsfläche verlaufende Lichtstrahlen nach bzw. vor Reflexion an der Reflexionsfläche an der Lichteintritts- und/oder -austrittsfläche der Totalreflexion und/oder der Reflexion an reflektierenden Bereichen unterworfen sind.

Durch die Ausnutzung der Totalreflexion für zumindest einen Teil der zu sammelnden Lichtstrahlen kann auf großflächige reflektierende Bereiche an der Lichteintritts- und/oder -austrittsfläche verzichtet werden.

Gemäß einem weiteren bevorzugten Ausführungsbeispiel der Erfindung ist das optische Element einstückig ausgebildet und vorzugsweise in einem Guß-, insbesondere Spritzguß-, Präge-, Ätz-, Dotier- und/oder Ionenaustauschverfahren hergestellt.

Die Zahl der zur Herstellung des optischen Systems erforderlichen Bauteile ist hierdurch auf ein Minimum begrenzt.

Gemäß einem weiteren bevorzugten Ausführungsbeispiel der Erfindung ist die Lichtleiterplatte schichtweise aufgebaut, wobei eine die Reflexionsfläche bildende Reflexionsplatte mit einem Stapel aus Einzelplatten verbunden ist.

Dies ermöglicht eine gezielte und einfach realisierbare Variation des Verlaufs der Brechzahl der Lichtleiterplatte zwischen der Eintritts- bzw. Austrittsfläche und der Reflexionsfläche, indem gemäß einer bevorzugten Variante für den Stapel Einzelplatten mit unterschiedlichen Brechzahlen verwendet werden.

Gemäß einer weiteren bevorzugten Ausführungsform der Erfindung sind parallel zur Ebene der Lichtleiterplatte verlaufende Grenzflächen, insbesondere Flächen von einen Stapel bildenden Einzelplatten und/oder von Einzelflächen der Lichteintritts- und/oder -austrittsfläche und/oder der Reflexionsfläche, zumindest bereichsweise zur Erfüllung optischer Funktionen ausgebildet.

Auf diese Weise kann die erfindungsgemäße Lichtleiterplatte bereits bei ihrer Herstellung an unterschiedliche Einsatzbedingungen angepaßt werden.

Weitere bevorzugte Ausführungsformen der Erfindung sind in den Unteransprüchen, der Beschreibung sowie der Zeichnung angegeben.

Die Erfindung wird im folgenden beispielhaft unter Bezugnahme auf die Zeichnung beschrieben. Es zeigen:
- Fig. 1: eine Schnittansicht eines teilweise dargestellten optischen Systems gemäß einer Ausführungsform der Erfindung,
- Fig. 2: eine Draufsicht auf ein optisches System gemäß einer weiteren Ausführungsform der Erfindung,
- Fig. 3: eine Schnittansicht einer teilweise dargestellten Lichtleiterplatte eines optischen Systems gemäß einer weiteren Ausführungsform der Erfindung,
- Fig. 4: eine Schnittansicht einer teilweise dargestellten Lichtleiterplatte eines optischen Systems gemäß einer weiteren Ausführungsform der Erfindung, und
- Fig. 5: teilweise eine schematische Draufsicht auf ein entsprechend Fig. 3 oder Fig. 4 ausgebildetes optisches System gemäß einer weiteren Ausführungsform der Erfindung.

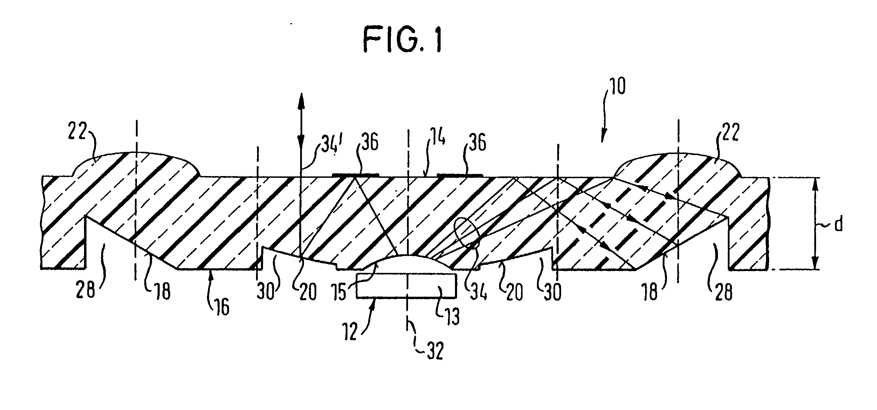

In Fig. 1 ist eine flache Lichtleiterplatte 10 eines erfindungsgemäßen optischen Systems dargestellt, die aus einem lichtdurchlässigen Kunststoff besteht und deren Dicke d etwa 2 mm beträgt. Die Abmessungen in der Ebene der Lichtleiterplatte 10 liegen in der Größenordnung von Zentimetern.

Die Lichtleiterplatte 10 ist ein einstückiges und im Spritzgußverfahren hergestelltes Bauteil, dessen eine Flachseite als Lichteintrittsfläche 14 und dessen andere Flachseite als Reflexionsfläche 16 dient.

Die Lichtleiterplatte 10 kann grundsätzlich jede beliebige Form bzw. Kontur aufweisen und ist bevorzugt an die Geometrie des jeweiligen Sensors oder allgemein der jeweiligen Gesamtanordnung angepaßt. Beispielsweise kann die Lichtleiterplatte 10 kreisförmig, elliptisch, streifenförmig, quadratisch oder rechteckig ausgeführt sein.

Schematisch ist in Fig. 1 eine Empfangseinheit 12 angedeutet, die eine Photodiode 13 umfaßt, welche im Bereich einer in Form einer Ausnehmung in der Lichtleiterplatte 10 vorgesehenen Linse 15 optisch derart an die Lichtleiterplatte 10 angekoppelt ist, daß sich in der Lichtleiterplatte 10 ausbreitende und im Bereich der Empfangseinheit 12 auf die Reflexionsfläche 16 fallende Lichtstrahlen über die Linse 15 zur lichtempfindlichen Fläche der Photodiode 13 gelangen. Grundsätzlich könnte die Photodiode 13 auch ohne Vorsehen der Linse 15 direkt an einen ebenen Bereich der Lichtleiterplatte 10 angekoppelt werden.

Alternativ kann anstelle der Empfangseinheit 12 auch eine Sendeeinheit vorgesehen sein, wobei in diesem Fall die der Reflexionsfläche 16 gegenüberliegende Flachseite der Lichtleiterplatte 10 als Lichtaustrittsfläche dienen würde. Des weiteren wäre es auch möglich, eine kombinierte Empfangs-/Sendeeinheit vorzusehen und die Fläche 14 als kombiniertes Lichteintritts- und/oder -austrittsfenster zu nutzen.

Die Lichteintrittsfläche 14 der Lichtleiterplatte 10 ist mit einer Vielzahl von linsenförmigen Erhebungen 22 versehen, die bei der Herstellung der Lichtleiterplatte 10 mit ausgebildet werden. Die Linsen 22, deren konvexen Oberflächen einen Teil der Lichteintrittsfläche 14 der Lichtleiterplatte 10 bilden, werden im folgenden auch allgemein als Subaperturen bezeichnet.

Jeder Subapertur 22 ist eine schräg zur Ebene der Lichtleiterplatte 10 verlaufende, im folgenden auch einfach als Schrägfläche bezeichnete reflektierende Einzelfläche 18 zugeordnet, die einen Teil der Reflexionsfläche 16 der Lichtleiterplatte 10 bildet. Die Schrägflächen 18 sind Begrenzungsflächen von keilförmigen Ausnehmungen 28 auf der Oberfläche der Lichtleiterplatte 10, die bei der Herstellung der Lichtleiterplatte 10 mit ausgebildet werden.

Die Rückseiten der reflektierenden Schrägflächen 18, d. h. die Bodenbereiche der Ausnehmungen 28, sind insbesondere durch Aufdampfen einer Metallschicht metallisiert und auf diese Weise verspiegelt.

Die Anordnung der Einzelflächen in der Ausführungsform gemäß Fig. 1 ist derart gewählt, daß die jeweils durch eine gestrichelte Linie angedeutete optische Achse jeder Linse 22 etwa durch die Mitte der dieser Linse 22 zugeordneten Schrägfläche 18 verläuft.

Die Ausdehnung sowohl der Linsen 22 als auch der Ausnehmungen 28 in der Ebene der Lichtleiterplatte 10 liegt im Bereich von wenigen Millimetern, so daß die Linsen 22 und Ausnehmungen 28 eine dreidimensionale Mikrostruktur auf der jeweiligen Flachseite der Lichtleiterplatte 10 bilden.

Die Reflexionsfläche 16 umfaßt weitere reflektierende Einzelflächen in Form von als Parabolspiegel 20 ausgebildeten Hohlspiegeln, die Begrenzungsflächen von bei der Herstellung der Lichtleiterplatte 10 ausgebildeten Ausnehmungen 30 darstellen und entsprechend den Schrägflächen 18 metallisiert sind.

Sowohl die Schrägflächen 18 als auch die Parabolspiegel 20 sind jeweils symmetrisch um eine die Mittelachse der Lichtleiterplatte 10 bildende Achse 32 herum verteilt angeordnet.

Für die Bereiche der Reflexionsschicht 16 zwischen den reflektierenden Einzelflächen 18, 20 sind keine speziellen Maßnahmen getroffen, um diese Bereiche als reflektierende Flächen auszubilden. Prinzipiell ist es aber möglich, auch diese Zwischenbereiche beispielsweise durch Metallisieren zu verspiegeln, um sie als wirksame Reflexionsflächen für einfallendes Licht zu nutzen.

Die reflektierenden Einzelflächen 18 sind jeweils in Abhängigkeit von der Brechzahl der Lichtleiterplatte 10 oder dem Brechzahlverlauf in der Lichtleiterplatte 10 derart ausgerichtet, daß durch die Lichteintrittsfläche 14 in die Lichtleiterplatte 10 einfallendes Licht nach Reflexion an den reflektierenden Einzelflächen 18 an der Lichteintrittsfläche 14 der Totalreflexion unterworfen ist und zur Empfangseinheit 12 weitergeleitet wird.

Dies ist in Fig. 1 durch die lediglich jeweils als Beispiel dienenden Lichtstrahlen 34 angedeutet, wobei die beiden inneren, näher an der Empfangseinheit 12 liegenden gestrichelten Linien jeweils durch einen Punkt der Lichteintrittsfläche 14 verlaufen, an dem ein mit der optischen Achse der jeweiligen Linse 22 zusammenfallender Lichtstrahl nach Reflexion an der jeweiligen Schrägfläche 18 an der Lichteintrittsfläche 14 der Totalreflexion unterworfen ist.

Für von den Parabolspiegeln 20 reflektierte Lichtstrahlen 34' sind an der Lichteintrittsfläche 14 reflektierende Bereiche 36 vorhanden, die beispielsweise durch Verspiegeln hergestellt werden und in Fig. 1 lediglich schematisch angedeutet sind. Damit die reflektierenden Bereiche 36 den Einfall von Licht auf die Parabolspiegel 20 nicht stören, sind die Parabolspiegel 20 möglichst nahe der jeweiligen Linse 22 angeordnet.

In Abhängigkeit von der Ausdehnung der Lichtleiterplatte 10 und der Anordnung sowie Neigung der Parabolspiegel 20 können grundsätzlich auch die von den Parabolspiegeln reflektierten Lichtstrahlen 34' einer Totalreflexion an der Lichteintrittsfläche 14 unterworfen werden.

Das über die Lichteintrittsfläche 14 einfallende und sich in der Lichtleiterplatte 10 ausbreitende Licht wird von der Linse 15 der Empfangseinheit 12 gesammelt und auf die lichtempfindliche Fläche der Photodiode 13 gelenkt, die an eine nicht dargestellte Verarbeitungseinheit angeschlossen ist.

Mit der erfindungsgemäß vorgesehenen Lichtleiterplatte 10 können folglich über die Lichteintrittsfläche 14 verteilt einfallende Lichtstrahlen an einer im Vergleich zur Größe der Lichteintrittsfläche 14 punktförmigen Stelle zusammengefaßt bzw. konzentriert werden.

Umgekehrt ist - im Fall des Vorsehens einer Lichtsendeeinheit anstelle der Lichtempfangseinheit 12 - die erfindungsgemäße Lichtleiterplatte 10 dazu in der Lage, zunächst konzentriert bzw. gebündelt vorliegende Lichtstrahlen nach Ausbreitung und Reflexion in der Lichtleiterplatte 10 über die als Lichtaustrittsfläche dienende gegenüberliegende Flachseite verteilt abzustrahlen.

Diese grundsätzliche Möglichkeit einer Doppelfunktion des erfindungsgemäßen optischen Systems ist in Fig. 1 durch die Doppelpfeile an den Lichtstrahlen 34, 34' angedeutet.

Die Lichtleiterplatte 10 weist eine räumlich konstante Brechzahl auf. Zumindest prinzipiell könnte die Lichtleiterplatte 10 alternativ jedoch auch mit einem grundsätzlich beliebigen Brechzahlverlauf versehen werden, der mit der Ausgestaltung und Anordnung der reflektierenden Einzelflächen 18, 20 abgestimmt ist und beispielsweise durch gezieltes Dotieren bzw. durch Ionenaustausch bei Verwendung spezieller Gläser eingestellt werden kann.

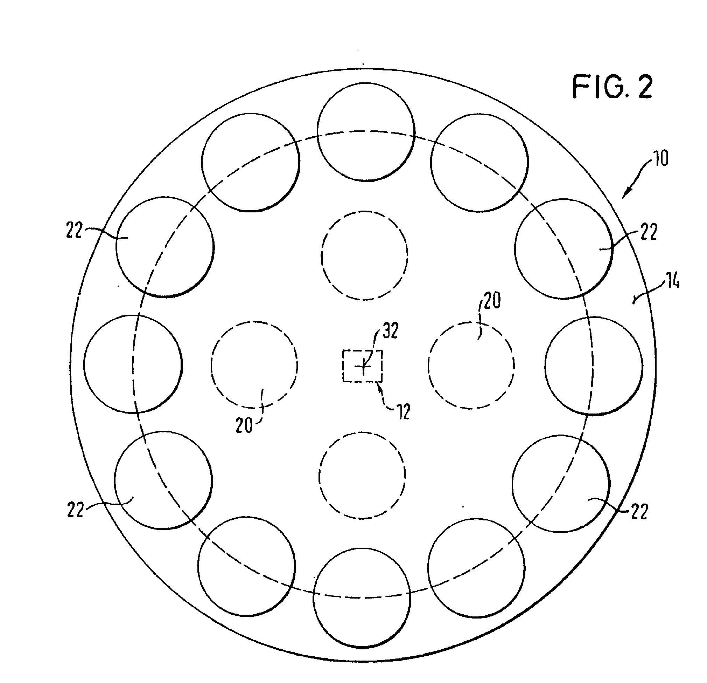

In der Ausführungsform gemäß Fig. 2 ist die Lichteintrittsfläche 14 der kreisförmigen Lichtleiterplatte 10 mit jeweils als Linse 22 ausgebildeten Subaperturen versehen, deren Zentren auf einem durch die gestrichelte Linie angedeuteten Kreis um eine durch die Empfangs-/Sendeeinheit 12 verlaufende Achse 32 der Lichtleiterplatte 10 liegen und die gleichmäßig verteilt angeordnet sind.

Die äußere Kontur der Lichtleiterplatte 10 kann grundsätzlich beliebig gewählt sein und ist an die Geometrie des jeweiligen Sensors oder allgemein der jeweiligen Gesamtanordnung angepaßt.

Des weiteren sind in Fig. 2 beispielhaft vier als Parabolspiegel 20 ausgebildete Hohlspiegel dargestellt, die einen Teil der Reflexionsfläche 16 der Lichtleiterplatte 10 bilden und mit denen entsprechend der anhand von Fig. 1 erläuterten Ausführungsform durch die Lichteintrittsfläche 14 einfallendes Licht auf die Lichteintrittsfläche 14 zurückgeworfen werden kann. Die Parabolspiegel 20 liegen ebenfalls auf einem Kreis um die Achse 32 und sind somit konzentrisch zu den Linsen 22 angeordnet. Nach Reflexion an der Lichteintrittsfläche 14, die zu diesem Zweck an den entsprechenden Bereichen, an denen keine Totalreflexion erfolgt, beispielsweise durch Metallisieren reflektierend ausgebildet ist, gelangt das Licht auf die im Zentrum der Linsen 22 bzw. Spiegel 20 angeordnete Empfangseinheit 12.

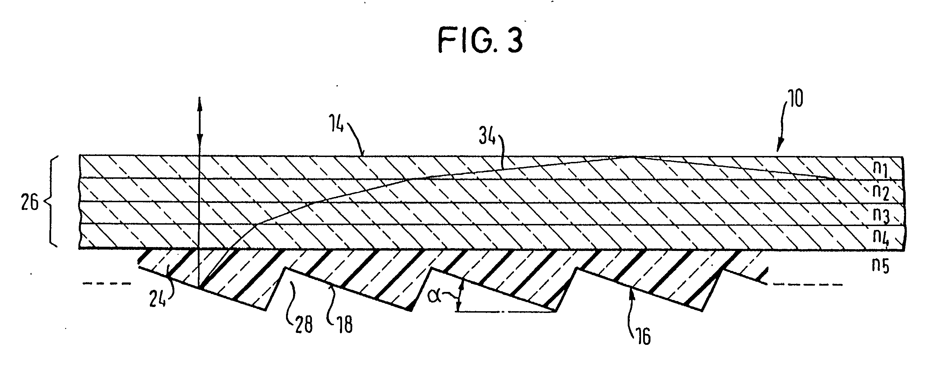

In Fig. 3 ist teilweise eine schichtweise aufgebaute Lichtleiterplatte 10 dargestellt, die zusammen mit einer nicht gezeigten Sende- und/oder Empfangseinheit ein optisches System gemäß der Erfindung bildet.

Die Lichtleiterplatte 10 umfaßt einen Stapel von Einzelplatten 26 und eine Reflexionsplatte 24. Die Einzelplatten 26 sind aus Silizium (nicht bei sichtbarem Licht), Glas oder Kunststoff hergestellt und beispielsweise durch Zusammenkitten miteinander sowie mit der als im Spritzgußverfahren aus Kunststoff hergestellten Reflexionsplatte 24 verbunden. Die Reflexionsplatte 24 ist mit prinzipiell entsprechend der Ausführungsform von Fig. 1 ausgebildeten, keilförmigen Ausnehmungen 28 zur Bildung von schräg zur Ebene der Lichtleiterplatte 10 verlaufenden reflektierenden Einzelflächen 18 versehen, welche zusammen den überwiegenden Teil der Reflexionsfläche 16 der Lichtleiterplatte 10 bilden und vorzugsweise durch Metallisieren verspiegelt sind.

Die Ausnehmungen 28 und somit die Schrägflächen 18 sind über die gesamte Flachseite der Lichtleiterplatte 10 verteilt angeordnet und derart bemessen, daß sie eine Mikrostruktur bilden.

Alternativ zu dem vorstehend beschriebenen Sandwichaufbau können auch einzelne lichtdurchlässige Schichten durch Aufdampfen geeigneter Materialien auf die Reflexionsplatte 24 aufgebracht werden.

Die Einzelplatten 26 sind mit unterschiedlichen, von der Lichteintrittsfläche 14 zur Reflexionsfläche 16 zunehmenden Brechzahlen n₁ bis n₄ versehen, wobei n₄ kleiner als die Brechzahl n₅ der Reflexionsschicht 24 ist. Mögliche Werte für die Brechzahlen sind: n₁ = 1,489, n₂ = 1,506, n₃ = 1,52, n₄ = 1,565 und n₅ = 1,579. Auf diese Weise ergibt sich in der Lichtleiterplatte 10 ein stufenförmiger Verlauf der Brechzahl senkrecht zur Ebene der Lichtleiterplatte 10.

Dieser Aufbau der Lichtleiterplatte 10 ermöglicht bei entsprechendem Neigungswinkel α der Schrägflächen 18, der in dem Beispiel von Fig. 3 jeweils 18° beträgt, die Erzeugung des in Fig. 3 anhand eines Lichtstrahles 34 beispielhaft gezeigten Strahlverlaufes durch wiederholte Lichtbrechung an den Grenzflächen zwischen den einzelnen Platten 26 bzw. Schichten. Bevorzugt ist der Neigungswinkel der Schrägflächen 18 individuell gewählt, um einen an die Position der jeweiligen Schrägfläche 18 optimal angepaßten Strahlverlauf zu erzielen.

Dabei ist das Licht an der Lichteintrittsfläche 14 der Totalreflexion unterworfen, so daß es zurück in die Lichtleiterplatte 10 reflektiert wird und so auf eine nicht dargestellte Empfangseinheit gelenkt werden kann. Der Doppelpfeil am Lichtstrahl 34 deutet an, daß auch eine in der umgekehrten Richtung stattfindende Lichtausbreitung möglich ist.

Anstelle eines Stapels von Einzelplatten 26 kann mit der Reflexionsplatte 24 auch eine einzige, beispielsweise aus Glas bestehende Platte verbunden werden, deren Brechzahl nach Art einer Grin-Linse kontinuierlich in Richtung der Reflexionsfläche 16 zunimmt. Ein derartiger Brechzahlverlauf kann beispielsweise durch gezieltes Dotieren der einzigen Platte bzw. durch Ionenaustausch bei Verwendung spezieller Gläser für die einzige Platte erreicht werden.

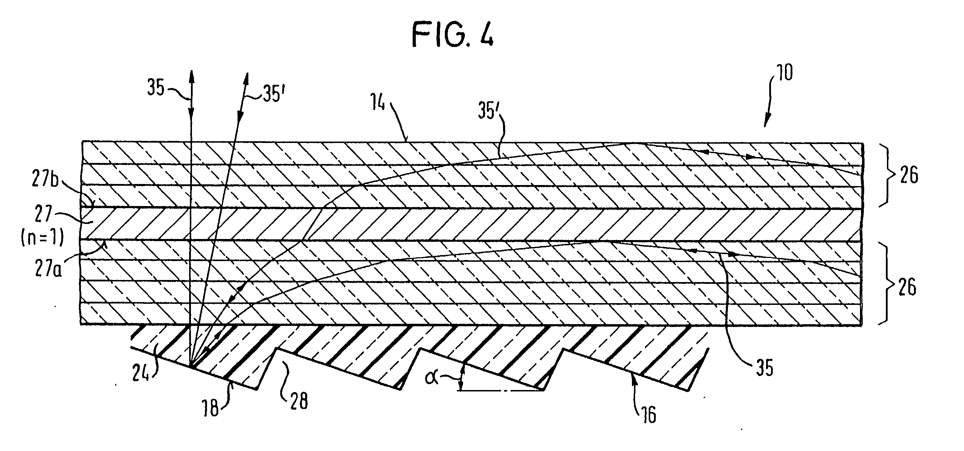

Fig. 4 zeigt eine ebenfalls schichtweise aus mehreren Einzelplatten 26 und einer Reflexionsplatte 24 aufgebaute Lichtleiterplatte 10. Im Unterschied zur Ausführungsform von Fig. 3 ist hier zwischen zwei Einzelplatten 26 eine als Trennschicht 27 dienende Luftschicht mit einer Brechzahl von n = 1 vorgesehen. Zumindest prinzipiell kann als Trennschicht 27 auch eine Vakuumschicht oder wenigstens eine Einzelplatte mit einer für den nachstehend erläuterten Zweck der Trennschicht 27 geeigneten Brechzahl vorgesehen werden.

Die Trennschicht 27 dient dazu, aus unterschiedlichen Winkelbereichen auf die Lichteintrittsfläche 14 - und somit nach Reflexion an einer Schrägfläche 18 der Reflexionsfläche 16 auf die Grenzfläche 27a zwischen einer Einzelplatte 26 und der Trennschicht 27 - auftreffende Lichtstrahlen 35, 35' zu trennen, die in Fig. 4 mit unterschiedlich ausgestalteten Pfeilen versehen sind. Hierzu sind die Brechzahlen der Einzelplatten 26 derart gewählt, daß aus einem ersten Winkelbereich stammende, in Fig. 4 durch einen Strahl 35 repräsentierte Lichtstrahlen an der Grenzfläche 27a der Totalreflexion unterworfen sind, und daß aus einem zweiten Winkelbereich stammende, in Fig. 4 durch einen Strahl 35' repräsentierte Lichtstrahlen an der Grenzfläche 27a gebrochen werden, durch die Trennschicht 27 hindurchtreten und sich nach Brechung an einer weiteren Grenzfläche 27b auf der von der Reflexionsfläche 16 abgewandten Seite der Trennschicht 27 durch einen Stapel weiterer Einzelplatten 26 ausbreiten und dabei an der Lichteintrittsfläche 14 der Totalreflexion unterworfen sind. Sofern die die Trennschicht 27 begrenzenden Einzelplatten 26 die gleiche Brechzahlfolge aufweisen, ergibt sich beim Übergang zwischen diesen Einzelplatten 26 durch die Trennschicht 27 hindurch ein Versatz der Lichtstrahlen 35', wie es in Fig. 4 gezeigt ist.

In dieser Variante der Erfindung werden die einfallenden Lichtstrahlen 35, 35' somit in Abhängigkeit von ihrem Einfallswinkel auf die Lichtleiterplatte 10 in sich oberhalb und unterhalb der Trennschicht 27 ausbreitendes Licht getrennt. Der Grenz-Einfallswinkel, von dem an bzw. bis zu dem die einfallenden Lichtstrahlen an der Grenzschicht 27a totalreflektiert bzw. gebrochen werden, ist insbesondere von der Anzahl und der Ausgestaltung der Einzelplatten 26 sowie von der Trennschicht 27 abhängig und kann erfindungsgemäß somit gezielt eingestellt werden.

Nach ihrer Trennung können die Lichtstrahlen 35, 35' an räumlich getrennten Bereichen einer lichtempfindlichen Fläche einer nicht dargestellten Empfangseinheit nachgewiesen werden, die sich z. B. senkrecht zur Ebene der Lichtleiterplatte 10 im Bereich einer als Lichtaustrittsfläche dienenden Kante der Lichtleiterplatte 10 erstreckt. Es ist auch möglich, die Kante der Lichtleiterplatte 10 als Umlenkspiegel auszubilden, der die Lichtstrahlen 35, 35' z. B. in Richtung der in diesem Fall in dem betreffenden Bereich als Lichtaustrittsfläche dienenden Reflexionsfläche 16 ablenkt, und mittels einer in diesem Bereich angeordneten Empfangseinheit räumlich getrennt nachzuweisen.

Zumindest prinzipiell ist auch der umgekehrte Lichtweg möglich, wie in Fig. 4 durch die Doppelpfeile angedeutet ist. Von räumlich getrennten Bereichen einer nicht dargestellten Sendeeinheit ausgehende Lichtstrahlen 35, 35' gelangen entweder nach Totalreflexion an der Grenzfläche 27a oder nach Totalreflexion an der nunmehr als Austrittsfenster dienenden Fläche 14 sowie nach mit Brechung an den Grenzflächen 27b und 27a verbundenem Durchtritt durch die Trennschicht 27 auf die Schrägflächen 18 der Reflexionsfläche 16, woraufhin die Lichtstrahlen 35, 35' in unterschiedliche Richtungen über die Lichtaustrittsfläche 14 abgestrahlt werden.

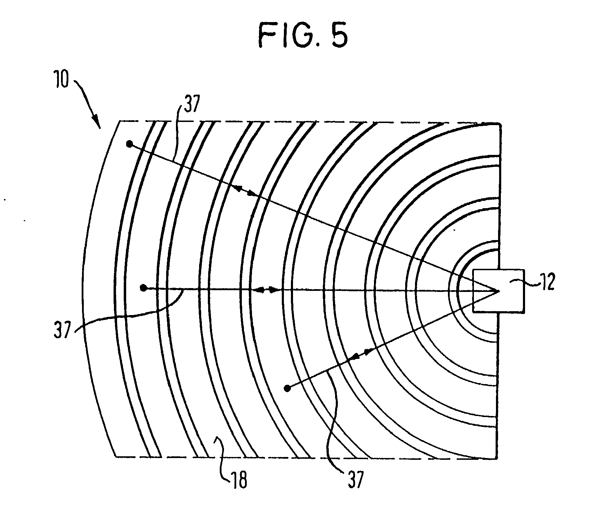

Aus der Draufsicht von Fig. 5 auf eine entsprechend Fig. 3 bzw. Fig. 4 ausgebildete Lichtleiterplatte 10 ist durch die einzelnen Schichten hindurch die terrassenartige Anordnung der Schrägflächen 18 in Form von konzentrischen Voll- bzw. Teilkreisringen um eine Empfangs- und/oder Sendeeinheit 12 zu erkennen.

Im Fall der Anordnung der Empfangs- und/oder Sendeeinheit 12 an einer Kante der Lichtleiterplatte 10 sind die Schrägflächen 18 z. B. jeweils halbkreisförmig ausgebildet, wobei alle Schrägflächen 18 den gleichen Neigungswinkel α (vgl. Fig. 3 bzw. Fig. 4) aufweisen können, um Lichtstrahlen 37, die an unterschiedlich weit von der Einheit 12 entfernt gelegenen Schrägflächen 18 reflektiert werden, an Bereichen der Einheit 12 nachzuweisen, die senkrecht zur Ebene der Lichtleiterplatte 10 räumlich voneinander getrennt sind.

Im Fall der Anordnung der Empfangs- und/oder Sendeeinheit 12 im Zentrum von konzentrische Kreisringe bildenden Schrägflächen 18 sind die Schrägflächen 18 bevorzugt in Abhängigkeit von ihrem Abstand zur Einheit 12 unterschiedlich derart geneigt, daß über die Lichteintrittsfläche einfallende und an den Schrägflächen 18 reflektierte Lichtstrahlen unabhängig von ihrer Auftreffstelle auf die Lichtleiterplatte 10 im Bereich der zentralen Einheit 12 konzentriert werden. Hierbei erfolgt somit gewissermaßen eine Fokussierung des einfallenden Lichts.

Die vorstehenden Ausführungen gelten sinngemäß auch für den umgekehrten Lichtweg, d. h. alle von einer Sendeeinheit 12, die z. B. im Zentrum von konzentrische Kreisringe bildenden Schrägflächen 18 angeordnet ist, ausgehenden Lichtstrahlen 37 können unter dem gleichen Ausfallswinkel und z. B. senkrecht zur Ebene der Lichtleiterplatte 10 über deren Lichtaustrittsfläche abgestrahlt werden.

Die vorstehend anhand der Fig. 3 bis 5 beschriebenen Ausführungsformen des erfindungsgemäßen optischen Systems ermöglichen unter Ausnutzung der Dispersion durch ihren Schichtaufbau und die damit verbundene wiederholte Lichtbrechung außerdem eine spektrale Zerlegung des einfallenden Lichts. Beispielsweise Rot- und Blauanteile des einfallenden Lichts werden nach Reflexion an den Schrägflächen 18 und Brechung an der ersten Grenzfläche zwischen der Reflexionsplatte 24 und der angrenzenden Einzelplatte 26 sowie allen weiteren Grenzflächen unterschiedlich stark gebrochen. Unterschiedliche Wellenlängen aufweisende Anteile des einfallenden Lichts breiten sich somit in unterschiedlichen Bereichen der Lichtleiterplatte 10 aus und können - z. B. entsprechend dem anhand von Fig. 4 erläuterten Prinzip - an räumlich getrennten Bereichen einer Empfangseinheit 12 nachgewiesen werden.

In Abhängigkeit von dem jeweiligen Einsatzzweck des erfindungsgemäßen optischen Systems können die einzelnen optisch wirksamen Flächen - in den vorstehend jeweils als Beispiel erläuterten Ausführungsformen der Erfindung die Linsen 22, die Schrägflächen 18, die Parabolspiegel 20 und die reflektierenden Bereiche 36 - auch einen kleinen oder größeren Anteil an der jeweiligen Fläche 14 bzw. 16 besitzen. Des weiteren können die Linsen 22 auch geneigt angeordnet werden, so daß ihre optischen Achsen schräg zur Ebene der Lichtleiterplatte 10 verlaufen. Die Neigungen der Schrägflächen 18 und der Parabolspiegel 20 können auch größer oder kleiner als in den erwähnten Ausführungsformen gewählt werden. Des weiteren können die Schrägflächen 18 und die Parabolspiegel 20 auch jeweils untereinander eine unterschiedlich große Neigung aufweisen.

Grundsätzlich kann die Lichtleiterplatte auch in einem anderen Gußverfahren als einem Spritzgußverfahren hergestellt werden. Die Strukturen auf den Flachseiten der Lichtleiterplatte, insbesondere die Mikrostrukturen, können auch im Anschluß an die Herstellung eines Plattenrohlings z. B. in einem Präge-, Ätz-, Dotier- und/oder Ionenaustauschverfahren ausgebildet werden.

Des weiteren können grundsätzlich alle Flächen der Lichtleiterplatte, d. h. etwa parallel zur Ebene der Lichtleiterplatte verlaufende Grenzflächen - wie z. B. die Flächen der den Stapel gemäß Fig. 3 und 4 bildenden Einzelplatten 26 - und/oder die Einzelflächen 18, 20, 22 der Lichteintrittsfläche 14 und/oder der Reflexionsfläche 16, zusätzliche optische Funktionen erfüllen.

Dazu können die Flächen als Filter, z. B. Polarisations- oder Spektralfilter, Blende, Strahlteiler und/oder Strahlformer ausgebildet werden, indem die Flächen z. B. mit entsprechenden Schichten versehen, geeignet dotiert oder in anderer Weise behandelt, z. B. mit dreidimensionalen Mikrostrukturen versehen werden.

Die optischen Eigenschaften der Lichtleiterplatte können auf diese Weise auch bei Verwendung eines homogenen Basismaterials in der Ebene der Lichtleiterplatte variiert werden. Dadurch kann in die Lichtleiterplatte eine Orts- und/oder Ortsfrequenzfilterung integriert werden.

Beispielsweise können bei einem zwei Platten, die den gleichen Brechungsindex aufweisen, umfassenden Mehrschichtaufbau der Lichtleiterplatte Blendenfunktionen zur Orts- und Ortsfrequenzfilterung eingebracht werden, indem die Zwischen- oder Grenzschicht zwischen den beiden Platten metallisiert oder mit einer Mikrostruktur versehen wird.

Die Mikrostrukturen, die bei einem Sandwichaufbau der Lichtleiterplatte jeweils an den Zwischen- oder Grenzschichten zwischen zwei Einzelplatten vorgesehen werden, können derart ausgebildet werden, daß sie unterschiedlichste Funktionen erfüllen und beispielsweise als Blende, Filter, Strahlteiler und/oder Strahlformer dienen.

Alternativ zu den vorstehend beschriebenen Ausführungsformen kann die Sende- bzw. Empfangseinheit auch im Bereich der Kanten bzw. Schmalseiten der Lichtleiterplatte angeordnet werden. Die Subaperturen und reflektierenden Flächen können dabei derart ausgeführt werden, daß das Licht über die Schmalseiten aus der Lichtleiterplatte austritt bzw. in die Lichtleiterplatte eintritt, oder daß das Licht an beispielsweise als Umlenkspiegel dienenden, abgeschrägten Schmalseiten auf die Reflexionsfläche und eine an diese angekoppelte Empfangseinheit bzw. in die Lichtleiterplatte hinein reflektiert wird.

Des weiteren können die Subaperturen an einer kombinierten Lichteintritts- und -austrittsfläche derart angeordnet werden, daß die Lichtleiterplatte entweder eine Autokollimationsfunktion aufweist oder eine vollständige Pupillenteilung vorliegt. Auch eine sogenannte Quasi-Autokollimationsfunktion ist realisierbar, bei der eine sowohl zum Abstrahlen als auch zum Empfangen von Licht dienende Subapertur von lediglich zum Empfangen von Licht dienenden Subaperturen umgeben ist.

Des weiteren ermöglicht es die Erfindung, mehrere Lichtleiterplatten z. B. in einer gemeinsamen Ebene zu einer Einheit zusammenfassen, um z. B. Lichtgitter mit einer beliebigen Geometrie zu erzeugen.

### Bezugszeichenliste

- 10: Lichtleiterplatte
- 12: Empfangs- und/oder Sendeeinheit
- 13: Photodiode
- 14: Lichteintrittsfläche
- 15: Linse
- 16: Reflexionsfläche
- 18: reflektierende Einzelflächen, Schrägflächen
- 20: reflektierende Einzelflächen, Parabolspiegel
- 22: Erhebungen, Linsen
- 24: Reflexionsplatte
- 26: Einzelplatten
- 27: Trennschicht
- 27a, 27b: Grenzflächen
- 28, 30: Ausnehmungen
- 32: Achse
- 34, 34': Lichtstrahlen
- 35, 35': Lichtstrahlen
- 36: reflektierende Bereiche
- 37: Lichtstrahlen

- d: Dicke der Lichtleiterplatte
- α: Neigungswinkel

## Patentansprüche

1. Optisches System, insbesondere für opto-elektronische Systeme, mit wenigstens einer lichtdurchlässigen flachen Lichtleiterplatte (10) und zumindest einer mit der Lichtleiterplatte (10) optisch gekoppelten Empfangs-/Sendeeinheit (12), wobei die eine Flachseite der Lichtleiterplatte (10) als Lichteintritts- und/oder -austrittsfläche (14) und zumindest die andere Flachseite als Reflexionsfläche (16) für sich in der Lichtleiterplatte (10) ausbreitendes Licht ausgebildet ist, und wobei die Lichtleiterplatte (10) derart ausgebildet ist, dass durch zumindest einen Bereich der Lichteintritts- und/oder -austrittsfläche (14) verlaufende und an der Reflexionsfläche (16) reflektierte Lichtstrahlen (34) im Bereich der Empfangs- /Sendeeinheit (12) konzentriert sind,
**dadurch gekennzeichnet,**
**dass** die Lichtleiterplatte (10) zur Bildung der Reflexionsfläche (16) und/oder der Lichteintritts- und/oder -austrittsfläche (14) jeweils mit einer Ausnehmungen (28, 30) und/oder Erhebungen (22) umfassenden Oberflächenstruktur versehen ist, die eine Mehrzahl von einzelnen Subaperturen bilden, wobei die Subaperturen zum Sammeln bzw. Abstrahlen von Licht über die Lichteintritts- und/oder -austrittsfläche (14) zusammenwirken, um über die Lichteintrittsfläche (14) verteilt einfallende Lichtstrahlen nach Ausbreitung und Reflexion in der Lichtleiterplatte (10) in der Empfangs-/Sendeeinheit (12) zu konzentrieren bzw. zunächst an der Empfangs-/ Sendeeinheit (12) konzentriert vorliegende Lichtstrahlen nach Ausbreitung und Reflexion in der Lichtleiterplatte (10)über die als Lichtaustrittsfläche (14) dienende Flachseite verteilt abzustrahlen.

2. Optisches System nach Anspruch 1,
**dadurch gekennzeichnet,**
**dass** die Oberflächenstruktur eine Mikrostruktur mit bevorzugt Abmessungen in der Größenordnung von Millimetern aufweisenden Strukturelementen ist.

3. Optisches System nach Anspruch 1 oder 2,
**dadurch gekennzeichnet,**
**dass** die Empfangs-/ Sendeeinheit (12) an und bevorzugt in unmittelbarer Nähe der die Reflexionsfläche (16) bildenden Flachseite der Lichtleiterplatte (10)angeordnet ist, wobei vorzugsweise die zum Empfangen und/oder Aussenden von Licht vorgesehene Fläche der Empfangs-/Sendeeinheit (12) wesentlich kleiner als die Lichteintritts- und/oder -austrittsfläche (14) ist.

4. Optisches System nach zumindest einem der vorhergehenden Ansprüche,
**dadurch gekennzeichnet,**
**dass** die Dicke der Lichtleiterplatte (10) weniger als etwa 1 cm, bevorzugt weniger als etwa 5 mm und insbesondere etwa 2 mm beträgt und bevorzugt die Abmessungen der Lichtleiterplatte (10) in der Ebene der Lichtleiterplatte (10) in der Größenordnung von Zentimetern liegen.

5. Optisches System nach zumindest einem der vorhergehenden Ansprüche,
**dadurch gekennzeichnet,**
**dass** die Reflexionsfläche (16) wenigstens eine ebene und schräg zur Ebene der Lichtleiterplatte (10) verlaufende und/oder wenigstens eine als Hohlspiegel, insbesondere als Parabolspiegel, ausgebildete reflektierende Einzelfläche (18, 20) umfasst.

6. Optisches System nach zumindest einem der vorhergehenden Ansprüche,
**dadurch gekennzeichnet,**
**dass** die Lichteintritts- und/oder -austrittsfläche (14) wenigstens eine zur Beugung und/oder Brechung von Licht ausgebildete Einzelfläche aufweist, die bevorzugt als Linse (22) ausgebildet ist.

7. Optisches System nach zumindest einem der vorhergehenden Ansprüche,
**dadurch gekennzeichnet,**
**dass** die Lichteintritts- und/oder -austrittsfläche (14) und/oder die Reflexionsfläche (16) jeweils eine Vielzahl von bevorzugt paarweise einander zugeordneten Einzelflächen (18, 22, 20, 36) aufweisen, die jeweils über die Lichtleiterplatte (10)verteilt und vorzugsweise symmetrisch bezüglich der Empfangs-/ Sendeeinheit (12) angeordnet sind.

8. Optisches System nach zumindest einem der vorhergehenden Ansprüche,
**dadurch gekennzeichnet,**
**dass** die Lichteintritts- und/ oder -austrittsfläche (14) zumindest bereichsweise als Reflexionsfläche für sich in der Lichtleiterplatte (10) ausbreitendes Licht ausgebildet, insbesondere verspiegelt ist.

9. Optisches System nach zumindest einem der vorhergehenden Ansprüche,
**dadurch gekennzeichnet,**
**dass** die Reflexionsfläche (16) derart ausgeführt ist, dass zumindest senkrecht und bevorzugt aus einem begrenzten vorbestimmten Raumwinkelbereich durch die Lichteintritts- und/oder -austrittsfläche (14) verlaufende Lichtstrahlen (34, 34') nach bzw. vor Reflexion an der Reflexionsfläche (16) an der Lichteintritts- und/oder -austrittsfläche (14) der Totalreflexion und/oder der Reflexion an reflektierenden Bereichen (36) unterworfen sind

10. Optisches System nach zumindest einem der vorhergehenden Ansprüche,
**dadurch gekennzeichnet,**
**dass** die Lichtleiterplatte (10) einstückig ausgebildet und vorzugsweise in einem Guß-, insbesondere Spritzguß-, Präge-, Ätz-, Dotier- und/oder Ionenaustauschverfahren hergestellt ist.

11. Optisches System nach zumindest einem der vorhergehenden Ansprüche,
**dadurch gekennzeichnet,**
**dass** zur Beugung und/oder Brechung von Licht ausgebildete Einzelflächen (22) und/oder reflektierende Bereiche (36) der Lichteintritts- und/oder -austrittsfläche (14) und/oder reflektierende Einzelflächen (18, 20) der Reflexionsfläche (16) auf einem Kreis um eine durch die Empfangs-/Sendeeinheit (12) verlaufende Achse (32) der Lichtleiterplatte (10) liegen und bevorzugt gleichmäßig verteilt angeordnet sind.

12. Optisches System nach zumindest einem der vorhergehenden Ansprüche,
**dadurch gekennzeichnet,**
**dass** die Lichtleiterplatte (10) schichtweise aufgebaut ist, wobei bevorzugt eine die Reflexionsfläche (16) bildende, bevorzugt aus Kunststoff und vorzugsweise im Spritzgußverfahren hergestellte Reflexionsplatte (24) mit einer Einzelplatte oder einem Stapel aus insbesondere zusammengekitteten Einzelplatten (26) verbunden ist, wobei die Einzelplatten (26) jeweils aus einem lichtdurchlässigen Material, insbesondere Silizium, Glas oder Kunststoff, hergestellt und/oder in Form einer aufgedampften Schicht vorgesehen sind.

13. Optisches System nach zumindest einem der vorhergehenden Ansprüche,
**dadurch gekennzeichnet,**
**dass** die Brechzahl der Lichtleiterplatte (10), insbesondere von einen Stapel bildenden Einzelplatten (26), zwischen der Lichteintritts- und/oder -austrittsfläche (14) und der Reflexionsfläche (16) variiert, insbesondere in Richtung der Reflexionsfläche (16) zunimmt

14. Optisches System nach zumindest einem der vorhergehenden Ansprüche,
**dadurch gekennzeichnet,**
**dass** eine mit einer die Reflexionsfläche (16) bildenden Reflexionsplatte verbundene Einzelplatte eine insbesondere nach Art einer Grin-Linse variierende und bevorzugt kontinuierlich in Richtung der Reflexionsfläche (16) zunehmende Brechzahl aufweist, wobei vorzugsweise der Brechzahlverlauf in einem Dotier- und/oder Ionenaustauschverfahren hergestellt ist.

15. Optisches System nach zumindest einem der vorhergehenden Ansprüche,
**dadurch gekennzeichnet,**
**dass** zwischen wenigstens zwei Einzelplatten eines die Lichtleiterplatte (10) bildenden Stapels von Einzelplatten (26) eine Trennschicht (27) bevorzugt in Form einer Luft- oder Vakuumschicht vorgesehen ist, wobei insbesondere die Lichtleiterplatte (10) derart ausgeführt ist, dass an Grenzflächen (27a, 27b) zwischen der Trennschicht (27) und benachbarten Einzelplatten (26) aus einem ersten Winkelbereich einfallende Lichtstrahlen (35) der Totalreflexion und aus einem zweiten Winkelbereich einfallende Lichtstrahlen (35') der Lichtbrechung unterworfen sind.

16. Optisches System nach zumindest einem der vorhergehenden Ansprüche,
**dadurch gekennzeichnet,**
**dass** zumindest im wesentlichen parallel zur Ebene der Lichtleiterplatte (10) verlaufende Grenzflächen, insbesondere Flächen von einen Stapel bildenden Einzelplatten (26), und/oder zumindest Einzelflächen (18, 20, 22) der Lichteintritts- und/oder -austrittsfläche (14) und/oder der Reflexionsfläche (16) jeweils wenigstens bereichsweise zur Erfüllung optischer Funktionen und bevorzugt als Filter, Blende, Strahlteiler und/oder Strahlformer ausgebildet sowie vorzugsweise mit Oberflächenstrukturen, insbesondere Mikrostrukturen, versehen sind.

17. Optisches System nach zumindest einem der vorhergehenden Ansprüche,
**dadurch gekennzeichnet,**
**dass** mehrere Lichtleiterplatten (10) zu einer Einheit zusammengefaßt und bevorzugt in einer gemeinsamen Ebene insbesondere zur Bildung eines Lichtgitters angeordnet sind.

18. Lichtleiterplatte, insbesondere für ein optisches System nach einem der vorhergehenden Ansprüche, die lichtdurchlässig und flach ausgebildet ist, wobei
- die eine Flachseite als Lichteintritts- und/oder -austrittsfläche (14) und zumindest die andere Flachseite als Reflexionsfläche (16) für sich in der Lichtleiterplatte (10) ausbreitendes Licht ausgebildet ist,
- die Lichtleiterplatte (10) derart ausgebildet ist, dass durch zumindest einen Bereich der Lichteintritts- und/oder -austrittsfläche (14) verlaufende und an der Reflexionsfläche (16) reflektierte Lichtstrahlen (34) in einem Bereich konzentriert sind, an dem die Lichtleiterplatte (10) mit einer Empfangs-/ Sendeeinheit (12) optisch koppelbar ist, und
- die Lichtleiterplatte (10) zur Bildung der Reflexionsfläche (16) und/oder der Lichteintritts- und/oder -austrittsfläche (14) jeweils mit einer Ausnehmungen (28, 30) und/oder Erhebungen (22) umfassenden Oberflächenstruktur versehen ist, die eine Mehrzahl von einzelnen Subaperturen bilden, wobei die Subaperturen zum Sammeln bzw. Abstrahlen von Licht über die Lichteintritts- und/oder -austrittsfläche (14) zusammenwirken, um über die Lichteintrittsfläche (14) verteilt einfallende Lichtstrahlen nach Ausbreitung und Reflexion in der Lichtleiterplatte (10) in der Empfangs-/ Sendeeinheit (12) zu konzentrieren bzw. zunächst an der Empfangs-/ Sendeeinheit (12) konzentriert vorliegende Lichtstrahlen nach Ausbreitung und Reflexion in der Lichtleiterplatte (10)über die als Lichtaustrittsfläche (14) dienende Flachseite verteilt abzustrahlen.

## Claims

1. An optical system, in particular for optoelectronic systems, comprising at least one light-permeable flat light guiding plate (10) and at least one receiver/ transmitter unit (12) optically coupled to the light guiding plate (10), wherein the one flat side of the light guiding plate (10) is made as the light entry surface and/or light exit surface (14) and at least the other flat side is made as the reflection surface (16) for light propagating in the light guiding plate (10), and wherein the light guiding plate (10) is made such that light beams (34) extending through at least one region of the light entry surface and/or light exit surface (14) and reflected at the reflection surface (16) are concentrated in the region of the receiver/ transmitter unit (12),
**characterised in that**
the light guiding plate (10) is provided in each case with a surface structure for the forming of the reflection surface (16) and / or of the light entry surface and/or light exit surface (14), said surface structure including recesses (28, 30) and/or elevated portions (22) which form a plurality of individual sub-apertures, with the sub-apertures cooperating to collect or radiate light via the light entry surface and/or light exit surface (14) in order to concentrate light beams incident in a distributed manner over the light entry surface (14) in the receiver/ transmitter unit (12) after propagation and reflection in the light guiding plate (10) or in order to radiate light rays first present in concentrated form at the receiver/transmitter unit (12) in a distributed manner via the flat side serving as a light exit surface (14) after propagation and reflection in the light guiding plate (10).

2. An optical system in accordance with claim 1, **characterised in that** the surface structure is a microstructure comprising structural elements preferably having dimensions in the order of magnitude of millimetres.

3. An optical system in accordance with claim 1 or claim 2, **characterised in that** the receiver/ transmitter unit (12) is arranged at, and preferably in direct proximity to, the flat side of the light guiding plate (10) forming the reflection surface (16), with the surface of the receiver/ transmitter unit (12) provided for the reception and/or transmission of light preferably being substantially smaller than the light entry surface and/or light exit surface (14).

4. An optical system in accordance with at least one of the preceding claims, **characterised in that** the thickness of the light guiding plate (10) is lower than approximately 1 cm, preferably lower than approximately 5 mm, and is in particular approximately 2 mm; and the dimensions of the light guiding plate (10) in the plane of the light guiding plate (10) preferably lie in the order of magnitude of centimetres.

5. An optical system in accordance with at least one of the preceding claims , **characterised in that** the reflection surface (16) comprises at least one planar individual reflecting surface (18, 20) which extends obliquely to the plane of the light guiding plate (10) and/or at least one individual reflecting surface (18, 20) made as a concave mirror, in particular as a parabolic mirror.

6. An optical system in accordance with at least one of the preceding claims , **characterised in that** the light entry surface and/or light exit surface (14) has at least one individual surface made for the diffraction and/or refraction of light which is preferably made as a lens (22)

7. An optical system in accordance with at least one of the preceding claims, **characterised in that** the light entry surface and/or light exit surface (14) and/or the reflection surface (16) each have a plurality of individual surfaces (18, 22, 20, 36) preferably associated with one another in pairs, which are each distributed over the light guiding plate (10) and are preferably arranged symmetrically with respect to the receiver/ transmitter unit (12).

8. An optical system in accordance with at least one of the preceding claims, **characterised in that** the light entry surface and/or light exit surface (14) is made at least regionally as a reflection surface for light propagating in the light guiding plate (10) and is in particular mirror coated.

9. An optical system in accordance with at least one of the preceding claims, **characterised in that** the reflection surface (16) is made such that light beams (34, 34') extending at least perpendicular through the light entry surface and/or light exit surface (14) and preferably extending from a limited, predetermined spatial angular region are subjected to total reflection and/or reflection at reflecting regions (36) at the light entry surface and/or light exit surface (14) after or before reflection at the reflection surface (16).

10. An optical system in accordance with at least one of the preceding claims, **characterised in that** the light guiding plate (10) is made in one piece and preferably in a moulding process, in particular an injection moulding process, a stamping process, an etching process, a doping process and/or an ion exchange process.

11. An optical system in accordance with at least one of the preceding claims, **characterised in that** individual surfaces (22) made for the diffraction and/or refraction of light and/or reflecting regions (36) of the light entry surface and/or light exit surface (14) and/or individual reflecting surfaces (18, 20) of the reflection surface (16) lie on a circle around an axis (32) of the light guiding plate (10) extending through the receiver/ transmitter unit (12) and are preferably arranged in a uniform distribution.

12. An optical system in accordance with at least one of the preceding claims, **characterised in that** the light guiding plate (10) is structured in layers, with a reflection plate (24) forming the reflection surface (16), preferably being made of plastic and preferably being manufactured in an injection moulding process being connected to a single plate or to a stack of individual plates (26), in particular cemented together, with the single plates (26) each being manufactured from a light permeable material, in particular silicon, glass or plastic, and/or being provided in the form of a coating evaporated on.

13. An optical system in accordance with at least one of the preceding claims, **characterised in that** the refractive index of the light guiding plate (10), in particular of individual plates (26) forming a stack, varies between the light entry surface and/or the light exit surface (14) and the reflection surface (16), and in particular increases in the direction of the reflection surface (16).

14. An optical system in accordance with at least one of the preceding claims, **characterised in that** an individual plate connected to a reflection plate forming the reflection surface (16) has a refractive index which in particular varies in the manner of a grin lens and preferably increases continuously in the direction of the reflection surface (16), with the development of the refractive index preferably being established in a doping process and/or an ion exchange process.

15. An optical system in accordance with at least one of the preceding claims, **characterised in that** a separating layer (27) is provided, preferably in the form of an air layer or a vacuum layer, between at least two individual plates of a stack of individual plates (26) forming the light guiding plate (10), with the light guiding plate (10) in particular being made such that light rays (35) incident from a first angular range are subjected to total reflection at interfaces (27a, 27b) between the separating layer (27) and adjacent individual plates (26) and light rays (35') incident from a second angular range are subjected to light refraction.

16. An optical system in accordance with at least one of the preceding claims, **characterised in that** interfaces extending at least substantially parallel to the plane of the light guiding plate (10), in particular surfaces of individual plates (26) forming a stack and/or at least individual surfaces (18, 20, 22) of the light entry surface and/ or light exit surface (14) and/ or of the reflection surface (16) are each made at least regionally for the satisfaction of optical functions and preferably as a filter, a diaphragm, a beam splitter and/or a beam shaper and are preferably provided with surface structures, in particular microstructures.

17. An optical system in accordance with at least one of the preceding claims, **characterised in that** a plurality of light guiding plates (10) are combined to form a unit and are preferably arranged in a common plane in particular to form a light grid.

18. A light guiding plate, in particular for an optical system in accordance with any one of the preceding claims, which is made permeable to light and flat, wherein
- the one flat side of the light guiding plate (10) is made as a light entry surface and/or light exit surface (14) and at least the other flat side is made as a reflection surface (16) for light propagating in the light guiding plate (10);
- the light guiding plate (10) is made such that light beams (34) extending through at least one region of the light entry surface and/or light exit surface (14) and reflected at the reflection surface (16) are concentrated in a region at which the light guiding plate (10) can be optically coupled to a receiver/transmitter unit (12); and
- the light guiding plate (10) is provided in each case with a surface structure for the forming of the reflection surface (16) and/or of the light entry surface and/or light exit surface (14), said surface structure preferably including recesses (28, 30) and/or elevated portions (22) which form a plurality of individual sub-apertures, with the sub-apertures working together to collect or radiate light via the light entry surface and/or light exit surface (14) in order to concentrate light beams incident in a distributed manner over the light entry surface (14) in the receiver/ transmitter unit (12) after propagation and reflection in the light guiding plate (10) or in order to radiate light rays first present in concentrated form at the receiver/ transmitter unit (12) in a distributed manner via the flat side serving as a light exit surface (14) after propagation and reflection in the light guiding plate (10).

## Revendications

1. Système optique, en particulier pour des systèmes optoélectroniques, comprenant au moins une plaque photoconductrice plate (10) transparente, et au moins une unité réceptrice/émettrice (12) optiquement couplée à la plaque photoconductrice (10), l'un des côtés plats de la plaque photoconductrice (10) étant réalisé à titre de surface d'entrée et/ou de sortie de lumière (14), et l'autre côté plat au moins étant réalisé à titre de surface de réflexion (16) pour la lumière qui se propage dans la plaque photoconductrice (10), et la plaque photoconductrice (10) est réalisée de telle façon que les rayons lumineux (34) qui traversent au moins une zone de la surface d'entrée et/ou de sortie de lumière (14) et qui sont réfléchis sur la surface de réflexion (16) sont concentrés dans la région de l'unité réceptrice/émettrice (12),
**caractérisé en ce que**
pour former la surface de réflexion (16) et/ou la surface d'entrée et/ou de sortie de lumière (14), la plaque photoconductrice (10) est dotée d'une structure de surface qui comprend des creux (28, 30) et/ou des bosses (22) qui forment une pluralité de sous-ouvertures individuelles, lesdites sous-ouvertures coopérant pour collecter ou pour diffuser de la lumière via la surface d'entrée et/ou de sortie de lumière (14) afin de concentrer les rayons lumineux qui tombent de façon répartie sur la surface d'entrée de lumière (14) dans l'unité émettrice/réceptrice (12) après leur propagation et leur réflexion dans la plaque photoconductrice (10), ou afin d'émettre de façon répartie les rayons lumineux tout d'abord présents de façon concentrée au niveau de l'unité réceptrice/émettrice (12) via le côté plat servant de surface de sortie de lumière (14), après leur propagation et leur réflexion dans la plaque photoconductrice (10).

2. Système optique selon la revendication 1,
**caractérisé en ce que** la structure de surface est une microstructure avec des éléments structurels présentant de préférence des dimensions de l'ordre de grandeur de quelques millimètres.

3. Système optique selon la revendication 1 ou 2,
**caractérisé en ce que** l'unité réceptrice/émettrice (12) est agencée au niveau, et de préférence au voisinage immédiat, de la face plate de la plaque photoconductrice (10) qui forme la surface de réflexion (16), et dans lequel de préférence la surface de l'unité réceptrice/émettrice (12) prévue pour recevoir et/ou pour émettre de la lumière est sensiblement plus petite que la surface d'entrée et/ou de sortie de lumière (14).

4. Système optique selon l'une au moins des revendications précédentes,
**caractérisé en ce que** l'épaisseur de la plaque photoconductrice (10) est inférieure à environ 1 cm, de préférence inférieure à environ 5 mm, et en particulier d'environ 2 mm, et les dimensions de la plaque photoconductrice (10) dans le plan de la plaque photoconductrice (10) sont de préférence de l'ordre de grandeur de quelques centimètres.

5. Système optique selon l'une au moins des revendications précédentes,
**caractérisé en ce que** la surface de réflexion (16) comprend au moins une surface individuelle (18, 20) plane et disposée en oblique par rapport au plan de la plaque photoconductrice (10) et/ou au moins une surface individuelle (18, 20) réfléchissante réalisée sous forme de miroir concave, en particulier sous forme de miroir parabolique.

6. Système optique selon l'une au moins des revendications précédentes,
**caractérisé en ce que** la surface d'entrée et/ou de sortie de lumière (14) présente au moins une surface individuelle réalisée pour diffuser et/ou pour diffracter de la lumière, et qui est de préférence réalisée sous forme de lentille (22).

7. Système optique selon l'une au moins des revendications précédentes,
**caractérisé en ce que** la surface d'entrée et/ou de sortie de lumière (14) et/ou la surface de réflexion (16) présentent chacune une pluralité de surfaces individuelles (18, 22, 20, 36) associées de préférence mutuellement par paires, qui sont agencées respectivement de façon répartie sur la plaque photoconductrice (10) et de préférence symétriquement par rapport à l'unité réceptrice/émettrice (12).

8. Système optique selon l'une au moins des revendications précédentes,
**caractérisé en ce que** la surface d'entrée et/ou de sortie de lumière (14) est réalisée au moins localement comme surface de réflexion pour la lumière qui se propage dans la plaque photoconductrice (10), en particulier spécularisée.

9. Système optique selon l'une au moins des revendications précédentes,
**caractérisé en ce que** la surface de réflexion (16) est ainsi réalisée que les rayons lumineux (34, 34') qui traversent la surface d'entrée et/ou de sortie de lumière (14) au moins perpendiculairement et de préférence depuis une plage angulaire prédéterminée limitée dans l'espace, sont soumis, après ou avant leur réflexion sur la surface de réflexion (16) et au niveau de la surface d'entrée et/ou de sortie de lumière (14), à une réflexion totale et/ou une réflexion au niveau de zones réfléchissantes (36).

10. Système optique selon l'une au moins des revendications précédentes,
**caractérisé en ce que** la plaque photoconductrice (10) est réalisée d'un seul tenant et est produite de préférence dans un processus de coulée, en particulier un processus de coulée par injection, un processus d'estampage, un processus par attaque chimique, un processus de dopage et/ou un processus d'échange ionique.

11. Système optique selon l'une au moins des revendications précédentes,
**caractérisé en ce que** des surfaces individuelles (22) réalisées pour la diffusion et/ou la diffraction de lumière et/ou des zones réfléchissantes (36) de la surface d'entrée et/ou de sortie de lumière (14) et/ou des surfaces individuelles réfléchissantes (18, 20) de la surface de réflexion sont disposées sur un cercle autour d'un axe (32), traversant l'unité réceptrice/émettrice (12), de la plaque photoconductrice (10) et de préférence agencées avec répartition régulière.

12. Système optique selon l'une au moins des revendications précédentes,
**caractérisé en ce que** la plaque photoconductrice (10) est réalisée par couches, où de préférence une plaque de réflexion (24) formant la surface de réflexion (16) et réalisée de préférence en matière plastique et de préférence dans un procédé de coulée par injection est reliée à une plaque individuelle ou à une pile de plaques individuelles (26) en particulier cimentées ensemble, lesdites plaques individuelles (26) étant produites chacune en un matériau transparent, en particulier en silicium, en verre ou en matière plastique et/ou étant prévues sous la forme de couche appliquée par vaporisation.

13. Système optique selon l'une au moins des revendications précédentes,
**caractérisé en ce que** l'indice de réfraction de la plaque photoconductrice (10), en particulier de plaques individuelles (26) formant une pile, varie entre la surface d'entrée et/ou de sortie de lumière (14) et la surface de réflexion (16), et augmente en particulier en direction de la surface de réflexion (16).

14. Système optique selon l'une au moins des revendications précédentes,
**caractérisé en ce qu'**une plaque individuelle reliée à une plaque de réflexion formant la surface de réflexion (16) présente un indice de réfraction qui varie à la manière d'une lentille de Grin et qui augmente de préférence en continu en direction de la surface de réflexion (16), l'évolution de l'indice de réfraction étant de préférence établie dans un processus de dopage et/ou d'échange ionique.

15. Système optique selon l'une au moins des revendications précédentes,
**caractérisé en ce que**, entre au moins deux plaques individuelles d'une pile de plaques individuelles (26) formant la plaque photoconductrice (10), il est prévu une couche de séparation (27), de préférence sous la forme d'une couche d'air ou de vide, et en particulier la plaque photoconductrice (10) est réalisée de telle façon que, au niveau des surfaces limites (27a, 27b) entre la couche de séparation (27) et les plaques individuelles voisines (26), les rayons lumineux (35) incidents provenant d'une première plage angulaire sont soumis à une réflexion totale et les rayons lumineux (35') incidents depuis une seconde plage angulaire sont soumis à une diffraction.

16. Système optique selon l'une au moins des revendications précédentes,
**caractérisé en ce que** des surfaces limites s'étendant au moins sensiblement parallèlement au plan de la plaque photoconductrice (10), en particulier des surfaces de plaques individuelles (26) formant une pile, et/ou au moins des surfaces individuelles (18, 20, 22) de la surface d'entrée et/ou de sortie de lumière (14) et/ou de la surface de réflexion (16) sont réalisées au moins localement pour remplir des fonctions optiques et sont réalisées de préférence comme filtre, comme diaphragme, comme diviseur de rayonnement et/ou comme conformateur de rayonnement, et sont de préférence pourvues de structures de surface, en particulier de microstructures.

17. Système optique selon l'une au moins des revendications précédentes,
**caractérisé en ce que** plusieurs plaques photoconductrices (10) sont regroupées en une unité, et sont de préférence agencées dans un plan commun, en particulier pour réaliser une grille lumineuse.

18. Plaque photoconductrice, en particulier pour un système optique selon l'une des revendications précédentes, qui est réalisée transparente et plate, dans laquelle :
- un côté plat est réalisé comme surface d'entrée et/ou de sortie de lumière (14) et au moins l'autre côté plat est réalisé comme surface de réflexion (16) pour la lumière qui se propage dans la plaque photoconductrice (10),
- la plaque photoconductrice (10) est réalisée de telle façon que les rayons lumineux (34) qui traversent au moins une zone de la surface d'entrée et/ou de sortie de lumière (14) et qui sont réfléchis sur la surface de réflexion (16) sont concentrés dans une zone à laquelle la plaque photoconductrice (10) peut être couplée optiquement à une unité réceptrice/émettrice (12), et
- pour former la surface de réflexion (16) et/ou la surface d'entrée et/ou de sortie de lumière (14), la plaque photoconductrice (10) est dotée d'une structure de surface qui comprend des creux (28, 30) et/ou des bosses (22) qui forment une pluralité de sous-ouvertures individuelles, lesdites sous-ouvertures coopérant pour collecter ou pour diffuser de la lumière via la surface d'entrée et/ou de sortie de lumière (14) afin de concentrer les rayons lumineux qui tombent de façon répartie sur la surface d'entrée de lumière (14) dans l'unité émettrice/réceptrice (12) après leur propagation et leur réflexion dans la plaque photoconductrice (10), ou afin d'émettre de façon répartie les rayons lumineux tout d'abord présents de façon concentrée au niveau de l'unité réceptrice/émettrice (12) via le côté plat servant de surface de sortie de lumière (14), après leur propagation et leur réflexion dans la plaque photoconductrice (10).
